Europäisches Patentamt

European Patent Office

Office européen des brevets

(11) Veröffentlichungsnummer: **0 255 944 B1**

# (12) EUROPÄISCHE PATENTSCHRIFT

(45) Veröffentlichungstag der Patentschrift: **11.03.92**

(21) Anmeldenummer: **87111285.0**

(22) Anmeldetag: **04.08.87**

(51) Int. Cl.⁵: **H01B** 13/02, G02B 6/44

(54) **Verseileinrichtung mit einer rotierenden Verseilscheibe.**

(30) Priorität: **07.08.86 DE 3626787**

(43) Veröffentlichungstag der Anmeldung:
**17.02.88 Patentblatt 88/07**

(45) Bekanntmachung des Hinweises auf die
Patenterteilung:
**11.03.92 Patentblatt 92/11**

(84) Benannte Vertragsstaaten:
**AT BE CH DE FR GB IT LI NL SE**

(56) Entgegenhaltungen:
**DE-A- 3 045 941**
**US-A- 2 863 171**

(73) Patentinhaber: **SIEMENS AKTIENGESELL-
SCHAFT**
**Wittelsbacherplatz 2**
**W-8000 München 2(DE)**

(72) Erfinder: **Mayr, Ernst**
**Wernbergstrasse 5**
**W-8130 Starnberg(DE)**
Erfinder: **Einsle, Günther**
**Hofbrunnstrasse 52**
**W-8000 München 71(DE)**

## Beschreibung

Die Erfindung betrifft eine Verseileinrichtung mit den im Oberbegriff des Anspruchs 1 aufgeführten Merkmalen.

Eine derartige Verseileinrichtung ist - bezüglich der Variante "elektrische Kabel" - aus der DE-A-3045941 bekannt.

Es ist bekannt, elektrische und/oder optische Kabel mit Füllmassen zu versehen, wobei darauf geachtet werden muß, daß sämtliche Zwickel vollständig gefüllt sind, um die notwendige Längswasserdichtigkeit zu gewährleisten. Üblicherweise wird dabei so verfahren, daß verseilte Bündel durch entsprechende Füllmassen gezogen werden (gegebenenfalls unter Druck) um sicherzustellen, daß eine vollständige Abdichtung aller Hohlräume gewährleistet ist. Je größer die Leiterelemente innerhalb der Verseileinheit sind, desto leichter lassen sich die (dementsprechend ebenfalls größeren) Zwickel mit Füllmasse schließen. Dagegen treten bei sehr dünnen Leiterelementen und einer entsprechend engen Zuordnung innerhalb eines Bündels erhebliche Schwierigkeiten auf. Derartige Strukturen können vor allem dann gegeben sein, wenn z.B. optische Fasern (Lichtwellenleiter) auf einen zugfesten Kern aufzuseilen sind und zwar in einer dichten Lage rund um den Kern. Es besteht somit das Bedürfnis, durch besondere Maßnahmen sicherzustellen, daß die allseitige und vollständige Füllung des Kabels mit Füllmasse auch bei hohen Fertigungsgeschwindigkeiten und für alle Seelenaufbauten gewährleistet werden kann.

Der Erfindung liegt die Aufgabe zugrunde, ausgehend von einer Verseileinrichtung der eingangs genannten Art einen Weg aufzuzeigen, auf dem es möglich ist, Verseileinheiten herzustellen, deren Zwickel mit Sicherheit vollständig mit Füllmasse geschlossen sind. Gemäß der Erfindung wird diese Aufgabe durch die im Anspruch 1 definierten Merkmale gelöst.

Bei der Erfindung wird somit das Zentralelement mit der Füllmasse versehen und zwar noch bevor die Aufbringung der übrigen Verseilelemente erfolgt. Dadurch finden die nachträglich aufgebrachten Verseilelemente bereits Füllmasse vor und werden in diese eingedrückt bzw.eingebettet, so daß freie Zwickel praktisch nicht mehr auftreten können. Dadurch daß die Aufbringvorrichtung mit der Verseilscheibe verbunden ist, wird trotz der Zuführung über nur einen oder mehrere radial verlaufende Kanäle eine ausreichende und allseitige Beschichtung oder Bedeckung der Oberfläche des inneren Zentralelementes erreicht. Da die Zuleitung der Füllmasse zunächst über eine feststehende Zuführungseinrichtung erfolgt, sind die Anschlüsse und die gesamte Installation in fester Bauweise möglich, während die Zuleitung zu dem radial verlaufenden Führungskanal in einfacher Weise über den zugehörigen Ringkanal von der Außenseite der Aufbringvorrichtung her erreicht wird.

Weiterbildungen der Erfindung sind in Unteransprüchen wiedergegeben.

Die Erfindung und ihre Weiterbildungen werden nachstehend anhand von Zeichnungen erläutert. Es zeigen:

Figur 1    in Seitenansicht im Schnitt eine mit einer erfindungsgemäßen Aufbringvorrichtung versehene Verseileinrichtung,

Figur 2    die Anordnung nach Figur 1 von vorne gesehen,

Figur 3    Einzelheiten des konstruktiven Aufbaus der Aufbringvorrichtung und

Figur 4    den Aufbau einer Verseileinheit von vorne gesehen.

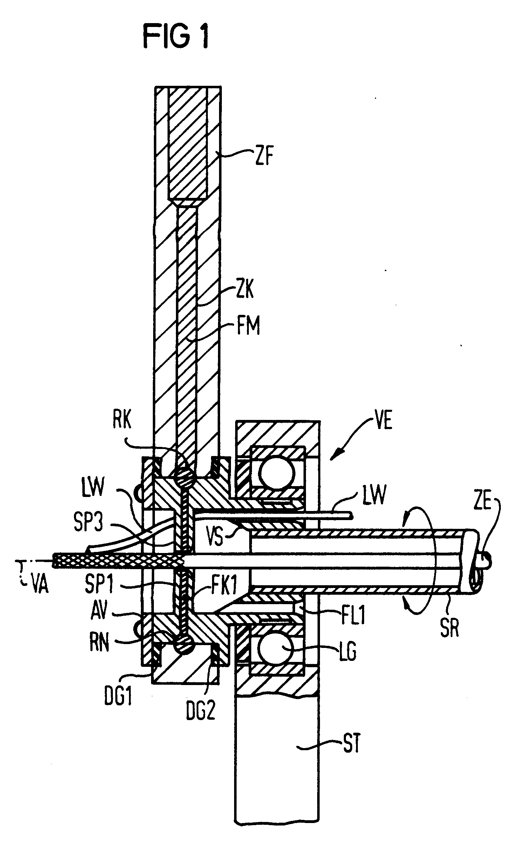

Bei der Verseileinrichtung VE nach Figur 1 ist angenommen, daß ein Zentralelement ZE (vorzugsweise ein zugfestes Element) von rechts nach links durch die Anordnung längs der Verseilachse VA bewegt wird. Für die Verseilung selbst ist ein nur teilweise gezeichneter Rohrspeicher vorgesehen, dessen Speicherrohr mit SR bezeichnet ist. Das Zentralelement ZE durchläuft das Innere dieses Speicherrohres SR. Am Ende des Speicherrohres SR ist auf diesem eine Verseilscheibe VS angebracht, die über ein Lager LG gegen eine feststehende Stützeinrichtung ST drehbar gelagert ist. Das Speicherrohr SR und damit die Verseilscheibe VS werden mit wechselnder Verseilrichtung betrieben (SZ-Verseilung). Die einzelnen zu verseilenden Elemente durchlaufen axial gerichtete Führungslöcher FL1 bis FL8 innerhalb der Verseilscheibe VS. Als Verseilelemente können elektrische und/oder optische Adern vorgesehen sein; im vorliegenden Beispiel ist angenommen, daß Lichtwellenleiter LW auf ein als zugfester Kern ZE dienendes Zentralelement aufgeseilt werden sollen. Zur Vereinfachung der Darstellung ist nur ein einziger derartiger Lichtwellenleiter LW gezeichnet, welcher am Ausgang der Verseilscheibe VS in einem entsprechenden Abstand auf die Oberfläche des Zentralelements ZE auftrifft.

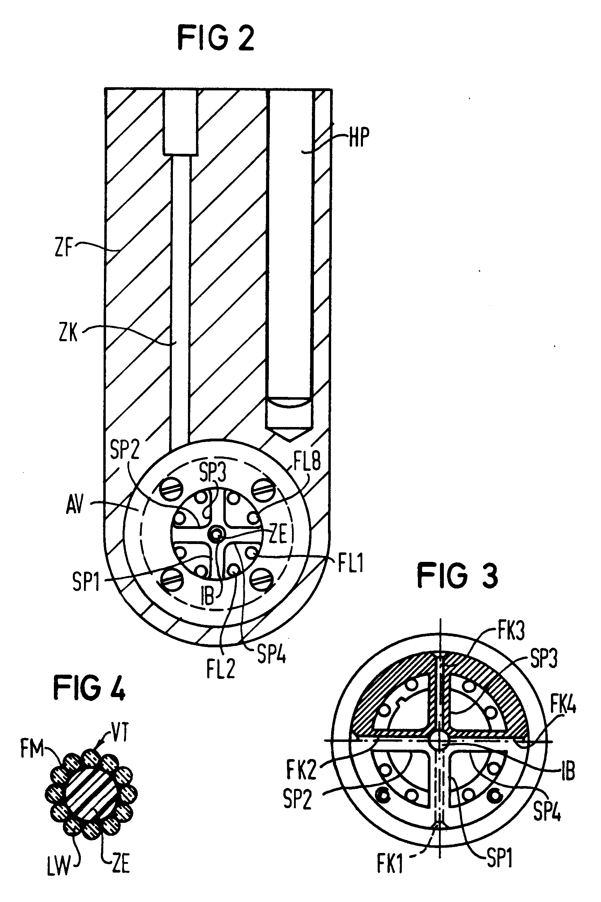

Wenn eine dichte Beseilung des Zentralelementes ZE mit einer Reihe von Lichtwellenleiteradern LW vorgenommen wird (vgl. z.B. Figur 4) dann bilden sich sehr viele sehr kleine längslaufende Zwickel, die schwer von außen durch eine Füllmasse verschlossen werden können. Um trotzdem eine vollständige Längsdichtigkeit der so hergestellten Verseileinheit VT zu gewährleisten, wird unmittelbar nach der Verseilscheibe VS und noch vor dem Auftreffen der Lichtwellenleiterader LW auf das Zentralelement ZE eine Füllmasse FM aufgebracht. Hierfür ist eine eigene Aufbringvorrichtung AV vorhanden, die in Durchlaufrichtung gesehen hinter der Verseilscheibe VS liegt. Es sind eine feststehende Zuführungseinrichtung ZF und eine scheibenförmige rotierende Aufbringvorrichtung AV vorgesehen, welche mit der Verseilscheibe VS verbunden ist und somit zusammen mit dieser rotiert. Im einzelnen wird die Füllmasse FM über einen Zuleitungskanal ZK im Bereich der Zuführungseinrichtung ZF bis zu einer Öffnung geführt, in welche die rotierende Aufbringvorrichtung AV eingepaßt ist. Wenn als Füllmasse Schmelzkleber verwendet wird oder wenn eine besondere Erhitzung der Füllmasse zu deren besserer Verflüssigung vorgesehen ist, kann im Bereich der Zuführungseinrichtung ZF eine Heizpatrone HP vorgesehen sein. Die feststehende Zuführungseinrichtung ZF endet mit ihrer inneren Stirnseite in einer in der Außenfläche der Aufbringvorrichtung AV angeordneten Ringnut RN. Beiderseits der Ringnut RN sind Ringdichtungen DG1 und DG2 vorgesehen, um auf diese Weise den Austritt von Füllmasse FM zwischen der feststehenden Zuführungseinrichtung ZF und der Aufbringvorrichtung AV zu verhindern. Im Bereich, in welchem der eigentliche Zuleitungskanal ZK auf die Ringnut RN trifft, ist ein Ringkanal RK vorgesehen, d.h. die Zuführungseinrichtung ZF und/oder die Außenseite der Aufbringvorrichtung AV weisen eine ringförmige Vertiefung auf, durch welche die Füllmasse außen rings um die Aufbringvorrichtung AV herum verteilt wird. Von hier aus verlaufen in radialer Richtung ein oder mehrere Zuführungskanäle FK im Inneren der Aufbringvorrichtung AV bis zur das Zentralelement ZE enthaltenden Durchtrittsöffnung. Im vorliegenden Beispiel sind 4 derartige Zuführungskanäle angenommen. Die als rotierende Scheibe ausgebildete Aufbringvorrichtung AV ist in ihrem Inneren (vgl. insbesondere Fig. 2 und Fig. 3) wie ein Speichenrad aufgebaut, d.h. sie weist vier Speichen SP1 bis SP4 auf. Diese Speichen SP1 bis SP4 erstrecken sich so weit nach außen, daß die Führungslöcher FL1 bis FL8 noch in dem durch die Speichen geschaffenen Freiraum der Aufbringvorrichtung AV zu liegen kommen. Damit ist gewährleistet, daß die acht Lichtwellenleiter LW ungehindert durch die Aufbringvorrichtung AV hindurchgelangen und auf die Oberfläche des Zentralelementes ZE aufgelegt werden können.

In jeder einzelnen der Speichen SP1 bis SP4 ist eine radial verlaufende Bohrung vorgesehen, welche den Führungskanal FK1 bis FK4 für die Füllmasse FM bildet (vgl. Fig. 3).

Infolge der schnellen Rotation der Verseilscheibe VS zusammen mit der als Scheibe ausgebildeten Aufbringvorrichtung AV wird eine ausreichend gleichmäßige Beschichtung des Zentralelementes ZE mit Füllmasse FM erreicht. Hierzu ist die Innenbohrung IB, durch welche das Zentralelement ZE hindurchläuft, nur wenig größer (beispielsweise 3 bis 10 % größer) als der Außendurchmesser des Zentralelementes ZE zu wählen. Infolge der schnellen Bewegung des Zentralelementes ZE durch die rotierende Aufbringvorrichtung AV hindurch wirkt diese gleichzeitig wie eine Abstreif- und Glättungseinrichtung.

Wie aus Figur 4 ersichtlich ist, sind bei der fertigen Verseileinheit VT infolge der Beschichtung des Zentralelementes ZE mittels Füllmasse FM die einzelnen Lichtwellenleiter LW praktisch vollständig in Füllmasse FM eingebettet, und es können keine längslaufenden, die Längsdichtigkeit des Kabels später beeinträchtigenden Zwickelöffnungen übrig bleiben.

## Patentansprüche

1. Verseileinrichtung (VE) mit einer rotierenden Verseilscheibe (VS), mit einer Aufbringvorrichtung (AV) zum Aufbringen von Füllmasse (FM) auf ein Zentralelement (ZE) einer zu einem elektrischen und/oder optischen Kabel gehörenden Verseileinheit (VT), mit einer das Zentralelement (ZE) umschließenden Aufbringvorrichtung (AV), die mindestens einen bezüglich der Verseilachse (VA) radial verlaufenden Zuführungskanal (FK) aufweist, und mit einer für die Zuleitung der Füllmasse (FM) vorgesehenen feststehenden Zuführungseinrichtung (ZF), **dadurch gekennzeichnet**, daß die Aufbringvorrichtung (AV) fest mit der Verseilscheibe (VS) verbunden ist und daß die Zuführungseinrichtung (ZF) über einen Ringkanal (RK) mit der Aufbringvorrichtung (AV) verbunden ist.

2. Verseileinrichtung nach Anspruch 1, **dadurch gekennzeichnet**, daß die Verseilscheibe (VS) mit einem Speicherrohr (SR) der als Rohrspeicher-Verseileinrichtung ausgeführten Verseileinrichtung verbunden ist.

3. Verseileinrichtung nach Anspruch 2, **dadurch gekennzeichnet**, daß das Zentralelement (ZE) das Speicherrohr (SR) durchläuft.

4. Verseileinrichtung nach einem der vorhergehenden Ansprüche, **dadurch gekennzeichnet**, daß die Aufbringvorrichtung (AV) und die Verseilscheibe (VS) ein Teil bilden.

5. Verseileinrichtung nach einem der vorhergehenden Ansprüche, **dadurch gekennzeichnet**, daß die Aufbringvorrichtung (AV) in der Art eines Speichenrades ausgebildet ist, wobei der oder die Zuführungskanäle (FK) durch eine Speiche bzw. mehrere Speichen (SP1 bis SP4) verläuft bzw. verlaufen.

6.  Verseileinrichtung nach einem der vorhergehenden Ansprüche,
    **dadurch gekennzeichnet,**
    daß die Zuführungseinrichtung (ZF) die scheibenförmig ausgebildete Aufbringvorrichtung (AV) allseitig vollständig umschließt.

7.  Verseileinrichtung nach einem der vorhergehenden Ansprüche,
    **dadurch gekennzeichnet,**
    daß zwischen der feststehenden Zuführungseinrichtung (ZF) und der Aufbringvorrichtung (AV) eine Abdichtung (DG1,DG2) vorgesehen ist

## Claims

1.  Stranding device (VE) with a rotating twisting disc (VS), having an applicator (AV) for applying filler (FM) to a central element (ZE) of a stranded unit (VT) belonging to an electrical and/or optical cable, an applicator (AV) which surrounds the central element (ZE) and has at least one feed channel (FK) extending radially with respect to the twisting axis (VA), and a fixed feed device (ZF) provided for feeding the filler (FM), characterised in that the applicator (AV) is permanently connected to the twisting disc (VS), and in that the feed device (ZF) is connected to the applicator (AV) via a ring channel (RK).

2.  Stranding device according to Claim 1, characterised in that the twisting disc (VS) is connected to a storage tube (SR) of the stranding device embodied as a tube-store stranding device.

3.  Stranding device according to Claim 2, characterised in that the central element (ZE) passes through the storage tube (SR).

4.  Stranding device according to one of the preceding claims, characterised in that the applicator (AV) and the twisting disc (VS) form one part.

5.  Stranding device according to one of the preceding claims, characterised in that the applicator (AV) is constructed in the form of a spoked wheel, the feed channel or channels (FK) extending through one or more spokes (SP1 to SP4).

6.  Stranding device according to one of the preceding claims, characterised in that the applicator (AV) constructed in the shape of a disc is completely surrounded on all sides by the feed device (ZF).

7.  Stranding device according to one of the preceding claims, characterised in that a seal (DG1, DG2) is provided between the fixed feed device (ZF) and the applicator (AV).

## Revendications

1.  Dispositif de câblage (VE) comportant une plaque de répartition (VS), un dispositif d'enduction (AV) servant à appliquer une masse de remplissage (FM) sur un élément central (ZE) d'une unité de câblage (VT) associée à un câble électrique et/ou optique, le dispositif d'enduction (AV) entourant l'élément central (ZE) et possédant au moins un canal d'alimentation (FK) qui s'étend radialement par rapport à l'axe de câblage (VR), et comprtant un dispositif fixe d'alimentation (ZF), qui est prévu pour amener la masse de remplissage (FM), caractérisé par le fait que le dispositif d'enduction (AV) est raccordé de façon fixe à la plaque de répartition (VS) et que le dispositif d'alimentation (ZF) est raccordé par l'intermédiaire d'un canal annulaire (RK) au dispositif d'enduction (AV).

2.  Dispositif de câblage suivant la revendication 1, caractérisé par le fait que la plaque de répartition (VS) est raccordée à un tube accumulateur (SE) du dispositif de câblage réalisé sous la forme d'un dispositif de câblage à accumulateur tubulaire.

3.  Dispositif de câblage suivant la revendication 2, caractérisé par le fait que l'élément central (ZE) traverse le tube accumulateur (SE).

4.  Dispositif de câblage suivant l'une des revendications précédentes, caractérisé par le fait que le dispositif d'enduction (AV) et la plaque de répartition (VS) forment une unité.

5.  Dispositif de câblage suivant l'une des revendications précédentes, caractérisé par le fait que le dispositif d'enduction (AV) est réalisé à la manière d'une roue à rayons, le ou les canaux d'alimentation (FK) traversant un ou plusieurs rayons (SP1 à SP4).

6.  Dispositif de câblage suivant l'une des revendications précédentes, caractérisé par le fait que le dispositif d'alimentation (ZF) entoure complètement, de tous côtés, le dispositif d'enduction (AV) réalisé en forme de disque.

7. Dispositif de câblage suivant l'une des revendications précédentes, caractérisé par le fait qu'un élément d'étanchéité (DG1,DG2) est prévu entre le dispositif fixe d'alimentation (ZF) et le dispositif d'enduction (AV).

# FIG 1

# FIG 2

# FIG 3

# FIG 4